# EUROPEAN PATENT SPECIFICATION

(11) **EP 4 080 637 B1**
(45) Date of publication and mention of the grant of the patent: **01.07.2026**
(21) Application number: 22165271.2
(22) Date of filing: 29.03.2022
(51) Int. Cl.: H01M 10/0567, H01M 10/0525, H01M 4/525, H01M 10/0568

(54) **ELECTROLYTIC SOLUTION FOR SECONDARY BATTERY AND LITHIUM SECONDARY BATTERY INCLUDING THE SAME**
ELEKTROLYTLÖSUNG FÜR EINE SEKUNDÄRBATTERIE UND LITHIUMSEKUNDÄRBATTERIE DIESELBE UMFASSEND
SOLUTION D'ÉLECTROLYTE POUR BATTERIE SECONDAIRE ET BATTERIE SECONDAIRE AU LITHIUM LA COMPRENANT

(30) Priority: 19.04.2021 KR 20210050347
(43) Date of publication of application: 26.10.2022
(73) Proprietor: SK On Co., Ltd., Seoul 03161 (KR)
(72) Inventor: SHIM, You Jin, 34124 Daejeon (KR)
(74) Representative: Stolmár & Partner Patentanwälte PartG mbB

(56) References cited:
- EP-A1- 3 605 712
- EP-A1- 3 703 174
- EP-A2- 3 528 332
- WO-A1-2019/027127
- CN-A- 112 397 704
- KR-A- 20180 124 722
- US-A1- 2018 226 686
- US-A1- 2021 159 541

## Description

### TECHNICAL FIELD

The following disclosure relates to an electrolytic solution for a secondary battery and a lithium secondary battery including the same, and more particularly, to an electrolytic solution for a secondary battery that contains a mixture of two or more bis(sulfonyl)imide lithium salts as an additive, and a lithium secondary battery employing the same.

### BACKGROUND

Recently, as an industrial environment is changed to pursue energy, studies on a new energy source have been intensively conducted.

As such an energy source, a lithium secondary battery already has been efficiently used as a power supply for mobile devices such as a smart phone and a laptop computer or electric vehicles because it has a high energy density and low self-discharge.

The lithium secondary battery includes a lithium salt which is an electrolyte and a non-aqueous solvent-based electrolytic It is required for the non-aqueous solvent to have a high dielectric and high ion conductivity in a wide temperature range in order to dissolve the lithium salt.

In order to satisfy these requirements, a solvent obtained by mixing a high boiling point solvent such as propylene carbonate or ethylene carbonate with a low boiling point solvent such as dimethyl carbonate or diethyl carbonate has been used.

In addition, an electrolytic solution to which various additives are added has been used to improve an initial capacity, cycle characteristics, high-temperature storage characteristics, low-temperature characteristics, self-discharge characteristics, over-charge characteristics, and the like of the lithium secondary battery.

However, in order for the lithium secondary battery to be used as a main power source or an auxiliary power source of an electric vehicle or a hybrid vehicle, it is required for the lithium secondary battery not only to exhibit a high performance but also to have a high energy density for a stable supply of power.

When an operating voltage range is widened while using an additive for an electrolytic solution according to the related art for a high voltage lithium secondary battery as it is, internal resistance and a lifespan of the battery are rapidly reduced.

That is, when a general electrolytic solution according to the related art is used, battery characteristics are excellent at a voltage of 4.2 V or lower; however, a battery performance deteriorates as the voltage is increased at a voltage of 4.2 V or higher.

Therefore, development of a material for an electrolyte having excellent voltage resistance even at a high voltage is required.

As an example, in order to solve such problems, U.S. Patent Application Publication No. 2019-0386338 discloses a lithium secondary battery having improved electrical properties and durability.

CN112 397 704 A, KR 2018 0124722 A and EP 3 528 332 A2 all describe electrolyte solutions for lithium secondary batteries, comprising a mixture of lithium salts including lithium bis(fluorosulfonyl) imide (LiFSI), lithium bis(trifluoromethanesulfonyl)imide (LiTFSI) and at least one further lithium salt, dissolved in an organic solvent, optionally in admixture with fluoroethylene carbonate (FEC) as additive.

EP 3 703 174 A1, EP 3 605 712 A1, WO 2019/027127 A1 and US 2018/226686 A1 also refer to non-aqueous electrolytes for lithium secondary batteries, comprising a mixture of several lithium salts including LiFSI and at least one further lithium salt dissolved in an organic solvent.

However, there is still a need for studies on an electrolytic solution for a secondary battery capable of improving electrical properties of the secondary battery at a high voltage and a high voltage lithium secondary battery including the same.

### SUMMARY

An embodiment of the present disclosure may be realized by providing an electrolytic solution for a secondary battery capable of significantly improving high-rate charge and discharge characteristics, output characteristics, quick charge characteristics, and low-temperature characteristics of the secondary battery, and a lithium secondary battery including the same.

In one general aspect, an electrolytic solution for a secondary battery contains
a lithium salt,
a non-aqueous organic solvent, and
a mixture of a bis(sulfonyl)imide lithium salt represented by Chemical Formula 2 and a bis(sulfonyl)imide lithium salt represented by Chemical Formula 3, as an additive: 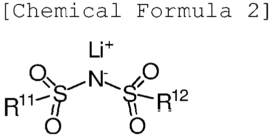 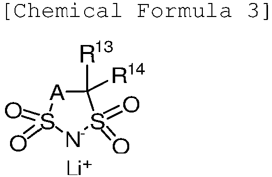 wherein
   A is -(CR¹⁵R¹⁶)ₙ-;
   R¹¹ to R¹⁶ are each independently fluoro or C1 - C5 perfluoroalkyl; and
   n is an integer of 0 to 3.

The additive may be selected from, but is not limited to, the following compounds:

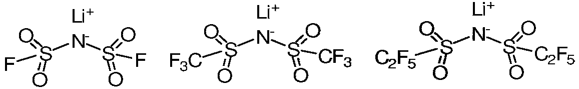

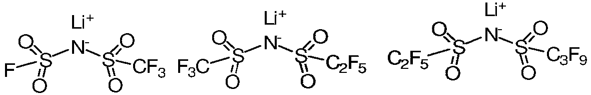

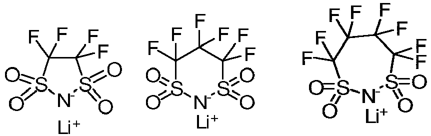

The additive may be present at a concentration of 0.1 to 0.5 M. The additive may be a mixture of lithium bis(fluorosulfonyl)imide and one or more compounds selected from bis(sulfonyl)imide lithium salts represented by the above described Chemical Formula 3.

The bis(sulfonyl)imide lithium salt represented by Chemical Formula 3 may be contained in an amount of 0.1 to 1.5 moles with respect to 1 mole of the lithium bis(fluorosulfonyl)imide.

The electrolytic solution may further contain a fluoro-substituted cyclic carbonate compound, wherein the fluoro-substituted cyclic carbonate compound may be contained in an amount of 0.1 to 5 wt% with respect to a total weight of the electrolytic solution.

The lithium salt may be one or two or more selected from the group consisting of LiPF₆, LiBF₄, LiClO₄, LiSbF₆, LiAsF₆, LiN(SO₃C₂F₅)₂, LiCF₃SO₃, LiC₄F_{g}SO₃, LiC₆H₅SO₃, LiSCN, LiAlO₂, LiAlCl₄ LiCl, LiI, and LiB(C₂O₄)₂, and the lithium salt may be present at a concentration of 0.3 to 1.0 M.

In another general aspect, a lithium secondary battery includes
a cathode including a nickel-cobalt-manganese-based cathode active material containing the following Chemical Formula 11, the following Chemical Formula 12, or a mixture thereof,
an anode,
a separator interposed between the cathode and the anode, and
the electrolytic solution for a secondary battery:

   [Chemical Formula 11] Liₓ(NiₐCo_{b}Mn_{c})O₂
wherein 0.5 < x < 1.3, 0.8 ≤ a < 1.2, 0 < b < 1, 0 < c < 1, and a + b + c = 1,

   [Chemical Formula 12] Liₓ(NiₐCO_{b}Mn_{c})O₄
wherein 0.5 < x < 1.3, 0.8 ≤ a < 2, 0 < b < 2, 0 < c < 2, and a + b + c = 2.

The lithium secondary battery according to an exemplary embodiment of the present disclosure includes the controlled electrolytic solution for a secondary battery that contains a specific cathode active material and a specific additive, such that the lithium secondary battery may be quickly charged and may have excellent cycle characteristics and significantly improved low-temperature characteristics.

The cathode active material may be Liₓ(NiₐCo_{b}Mn_{c})O₂ in which 0.95 ≤ x ≤ 1.10, 0.8 ≤ a < 0.9, and a + b + c = 1.

### BRIEF DESCRIPTION OF THE DRAWINGS

FIG. 1 is a graph showing quick charge characteristics of lithium secondary batteries produced in Example 1 and Comparative Examples 1 and 2 of the present disclosure.
FIG. 2 is a graph showing cycle characteristics of the lithium secondary batteries produced in Example 1 and Comparative Examples 1 and 2 of the present disclosure.
FIG. 3 is a graph showing cycle characteristics of lithium secondary batteries produced in Example 2 and Comparative Examples 1, 3, and 4 of the present disclosure.

### DETAILED DESCRIPTION OF EMBODIMENTS

Hereinafter, the present disclosure will be described in more detail. Unless otherwise defined, all the technical terms and scientific terms used herein have the general meanings as commonly understood by those skilled in the art to which the present disclosure pertains, and the description for the known function and configuration unnecessarily obscuring the gist of the present disclosure will be omitted in the following description.

The term "alkyl" described in the present disclosure refers to an aliphatic hydrocarbon group having 1 to 10 carbon atoms, 1 to 8 carbon atoms, 1 to 5 carbon atoms, or 1 to 4 carbon atoms. The used alone or in combination may be linear or branched alkyl. Specific examples of the linear or branched alkyl may include ethyl, n-propyl, isopropyl, n-butyl, isobutyl, tert-butyl, n-pentyl, neopentyl, n-hexyl, isohexyl, n-heptyl, n-octyl, n-nonyl, and n-decyl.

The term "fluoroalkyl" described in the present disclosure means that some or all hydrogens present in alkyl are substituted with fluoro, and examples thereof may include -CF₃, - CH₂CF₃, and - CF₂CF₃.

The term "fluoro-substituted cyclic carbonate" described in the present disclosure means that hydrogen present in cyclic carbonate is substituted with one or more fluoro, and examples thereof may include fluoroethylene carbonate and fluoropropylene carbonate.

The term "perfluoro alkyl" described in the present disclosure means that all hydrogens are substituted with fluoro, the hydrogen being present in alkyl having 1 to 10 carbon atoms, 1 to 6 carbon atoms, or 1 to 4 carbon atoms, and examples thereof may include trifluoromethane and pentafluoroethane.

The term "discharge" described herein refers to a process of deintercalating lithium ions from an anode, and the term "charge" refers to a process of intercalating lithium ions into an anode.

The present disclosure provides an electrolytic solution for a secondary battery capable of significantly improving quick charge characteristics, cycle characteristics, and low-temperature characteristics of the secondary battery. The electrolytic solution for a secondary battery of the present disclosure contains
a lithium salt,
a non-aqueous organic solvent, and
a mixture of a bis(sulfonyl)imide lithium salt represented by Chemical Formula 2 and a bis(sulfonyl)imide lithium salt represented by Chemical Formula 3, as an additive.

The electrolytic solution for a secondary battery of the present disclosure contains the mixture of two or more bis(sulfonyl)imide lithium salts, such that the secondary battery may be quickly charged and may have improved low-temperature characteristics.

Specifically, the electrolytic solution for a secondary battery of the present disclosure contains a bis(sulfonyl)imide lithium salt substituted with fluoro, which is a specific compound, and also contains a mixture of two or more substituted-bis(sulfonyl)imide lithium salts different from each other, such that a lithium secondary battery employing the same has further improved electrical characteristics.

The bis(sulfonyl)imide lithium salts used according to the present invention are represented by the following Chemical Formulae 2 and 3 : 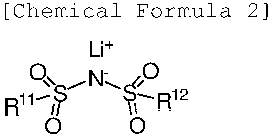 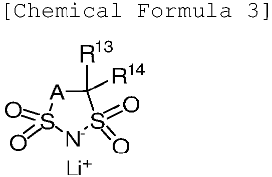 wherein
A is -(CR¹⁵R¹⁶)ₙ-;
R¹¹ to R¹⁶ are each independently fluoro or C1 - C5 perfluoroalkyl; and
n is an integer of 0 to 3.

In Chemical Formula 2 or 3 according to an exemplary embodiment of the present disclosure, R¹¹ to R¹⁶ are each independently fluoro or perfluoro C1-C4 alkyl; and n may be an integer of 0 to 2.

More specifically, the additive according to an exemplary embodiment of the present disclosure may be selected from, but is not limited to, the following compounds:

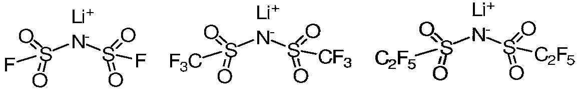

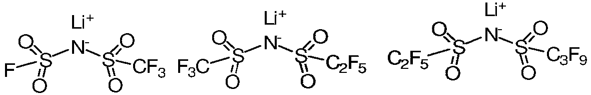

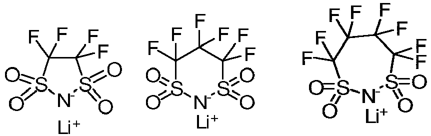

The additive according to an exemplary embodiment of the present disclosure may be present at a concentration of 0.1 to 0.5 M or a concentration of 0.2 to 0.5 M.

The additive according to the present invention is a mixture of acyclic lithium bis(fluorosulfonyl)imide and cyclic lithium bis(fluorosulfonyl)imide.

Specifically, the additive according to the present invention is a mixture of a bis(sulfonyl)imide lithium salt represented by Chemical Formula 2 and a bis(sulfonyl)imide lithium salt represented by Chemical Formula 3.

In terms of further improving electrical characteristics, the additive according to an exemplary embodiment of the present disclosure may be a mixture of lithium bis(fluorosulfonyl)imide and one or more compounds selected from bis(sulfonyl)imide lithium salts represented by the following Chemical Formula 3: : 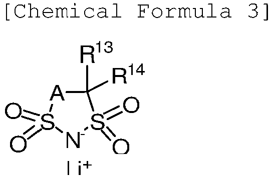 wherein
A is -(CR¹⁵R¹⁶)ₙ-;
R¹³ to R¹⁶ are each independently fluoro or C1 - C5 perfluoroalkyl; and
n is an integer of 0 to 3.

The bis(sulfonyl)imide lithium salt represented by Chemical Formula 3 according to an exemplary embodiment of the present disclosure may be contained in an amount of 0.1 to 1.5 moles or 0.2 to 1.0 mole with respect to 1 mole of the lithium bis(fluorosulfonyl)imide.

The electrolytic solution for a secondary battery according to an exemplary embodiment of the present disclosure may further contain a fluoro-substituted cyclic carbonate compound. As an example, the fluoro-substituted cyclic carbonate compound may be one or two or more selected from fluoroethylene carbonate, fluorovinylene carbonate, and fluoropropylene carbonate, and may be contained in an amount of 0.1 to 5 wt% or 0.5 to 3 wt% with respect to a total weight of the electrolytic solution.

The electrolytic solution for a secondary battery according to an exemplary embodiment of the present disclosure further contains the fluoro-substituted cyclic carbonate compound, such that the secondary battery has excellent cycle characteristics and low-temperature characteristics.

Any lithium salt used in an electrolytic solution for a secondary battery may be used, and the lithium salt according to an exemplary embodiment of the present disclosure may be one or two or more selected from the group consisting of LiPF₆, LiBF₄, LiClO₄ LiSbF₆, LiAsF₆, LiN(SO₃C₂F₅)₂, LiCF₃SO₃, LiC₄F₉SO₃, LiC₆H₅SO₃, LiSCN, LiAlO₂, LiAlCl₄, LiCl, LiI, and LiB(C₂O₄)₂, or may be one or two or more selected from LiPF₆, LiBF₄, LiClO₄, LiSbF₆, and LiAsF₆.

In the electrolytic solution for a secondary battery according to an exemplary embodiment of the present disclosure, the lithium salt may be present at a concentration of 0.3 to 1.0 M or a concentration of 0.3 to 0.8 M.

The electrolytic solution for a secondary battery according to an exemplary embodiment of the present disclosure may further contain, as an additional additive, one or two or more additives selected from the group consisting of an oxalatoborate-based compound, an oxalatophosphate-based compound, a fluorine-substituted carbonate-based compound, a vinylidene carbonate-based compound, and a sulfinyl group-containing compound.

The oxalatoborate-based compound according to an exemplary embodiment of the present disclosure may be a compound represented by the following Chemical Formula A or lithium bis(oxalato)borate (LiBOB (LiB(C₂O₄)₂)): 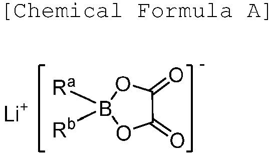 wherein R^{a} and R^{b} are each independently halogen or halo C1-C10 alkyl.

Specific examples of the oxalatoborate-based compound may include lithium difluoro(oxalato)borate (LiDFOB, (LiB(C₂O₄)F₂)) and lithium bis(oxalato)borate (LiBOB, (LiB(C₂O₄)₂)).

The oxalatophosphate-based compound may be a compound represented by the following Chemical Formula B or lithium difluoro bis(oxalato)phosphate (LiDFBOP, (LiPF₂(C₂O₄)₂)): 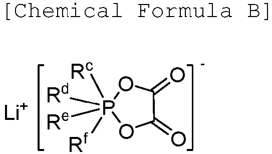 wherein R^{c} to R^{f} are each independently halogen or halo C1-C10 alkyl.

Specific examples of the oxalatophosphate-based compound may include lithium tetrafluoro(oxalato)phosphate (LiTFOP, (LiPF₄(C₂O₄))) and lithium difluoro bis(oxalato)phosphate (LiDFBOP, (LiPF₂(C₂O₄)₂)).

The fluorine-substituted carbonate-based compound may be fluoroethylene carbonate (FEC), difluoroethylene carbonate (DFEC), fluorodimethyl carbonate (FDMC), fluoroethylmethyl carbonate (FEMC), or a mixture thereof.

The vinylidene carbonate-based compound may be vinylene carbonate (VC), vinyl ethylene carbonate (VEC), or a mixture thereof.The sulfinyl group (S=O)-containing compound may be a sulfone compound, a sulfite compound, a sulfonate compound, a sultone compound, or a sulfate compound, and these sulfinyl group (S=O)-containing compounds may be used alone or in combination.

Specifically, the sulfone compound may be a sulfone compound represented by the following Chemical Formula C: 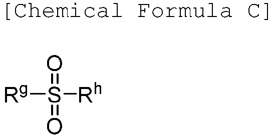 wherein
R^{g} and R^{h} are each independently hydrogen, halogen, C1-C10 alkyl, C2-C10 alkenyl, halo C1-C10 alkyl, halo C2-C10 alkenyl, or C6-C12 aryl.

Non-limiting examples of the sulfone compound may include, but are not limited to, dimethyl sulfone, diethyl sulfone, ethyl methyl sulfone, methyl vinyl sulfone, and divinyl sulfone. In addition, these compounds may be used alone or as a mixture of two or more thereof.

Specifically, the sulfite compound may be a sulfite compound represented by the following Chemical Formula D: 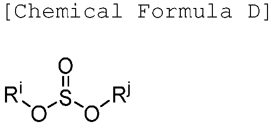 wherein
Rⁱ and R^{j} are each independently hydrogen, halogen, C1-C10 alkyl, C2-C10 alkenyl, halo C1-C10 alkyl, halo C2-C10 alkenyl, or C6-C12 aryl, or Rⁱ and R^{j} may be linked to each other by - CR¹⁰⁰R¹⁰¹CR¹⁰²R¹⁰³(CR¹⁰⁴R¹⁰⁵)ₘ- to form a ring;
R¹⁰⁰ to R¹⁰⁵ are each independently hydrogen, C1-C10 alkyl, or phenyl; and
m is an integer of 0 or 1.

Non-limiting examples of the sulfite compound may include, but are not limited to, ethylene sulfite, methyl ethylene sulfite, ethyl ethylene sulfite, 4,5-dimethyl ethylene sulfite, 4,5-diethyl ethylene sulfite, propylene sulfite, 4,5-dimethyl propylene sulfite, 4,5-diethyl propylene sulfite, 4,6-dimethyl propylene sulfite, 4,6-diethyl propylene sulfite, and 1,3-butylene glycol sulfite. In addition, these compounds may be used alone or as a mixture of two or more thereof.

Specifically, the sulfonate compound may be a sulfonate compound represented by the following Chemical Formula E: 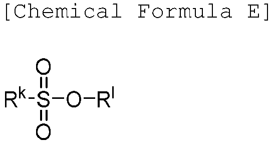 wherein
R^{k} and R^{l} are each independently hydrogen, halogen, C1-C10 alkyl, C2-C10 alkenyl, halo C1-C10 alkyl, halo C2-C10 alkenyl, or C6-C12 aryl.

Non-limiting examples of the sulfonate compound may include, but are not limited to, methyl methanesulfonate, ethyl methanesulfonate, methyl ethanesulfonate, propyl methanesulfonate, methyl propanesulfonate, ethyl propanesulfonate, vinyl methanesulfonate, allyl methanesulfonate, vinyl benzenesulfonate, and allyl prop-2-ene sulfonate. In addition, these compounds may be used alone or as a mixture of two or more thereof.

Specifically, the sultone compound may be a sultone compound represented by the following Chemical Formula F: 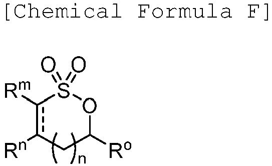 wherein
- - - represents a single bond or a double bond;
R^{m} to R° are each independently hydrogen, halogen, C1-C10 alkyl, C2-C10 alkenyl, halo C1-C10 alkyl, halo C2-C10 alkenyl, or C6-C12 aryl; and
n is an integer of 0 to 3.

Non-limiting examples of the sultone compound may include, but are not limited to, ethane sultone, 1,3-propane sultone (PS), 1,4-butane sultone (BS), ethene sultone, 1,3-propene sultone (PRS), 3-fluoro-1,3-propane sultone (FPS), and 1,4-butene sultone. In addition, these compounds may be used alone or as a mixture of two or more thereof.

Specifically, the sulfate compound may be a cyclic sulfate compound represented by the following Chemical Formula G: 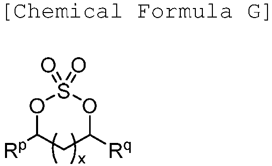 wherein
R^{p} and R^{q} are each independently hydrogen, halogen, C1-C10 alkyl, C2-C10 alkenyl, halo C1-C10 alkyl, halo C2-C10 alkenyl, or C6-C12 aryl; and
x is an integer of 0 to 3.

Non-limiting examples of the sulfate compound may include, but are not limited to, ethylene sulfate (ESA), propylene sulfate, 2,3-butylene sulfate, 1,3-propylene sulfate, and 1,3-butylene sulfate. In addition, these compounds may be used alone or as a mixture of two or more thereof.

The electrolytic solution according to an exemplary embodiment of the present disclosure is generally stable in a temperature range of -20°C to 60°C or 10°C to 60°C and electrochemical stability thereof is maintained even at a high voltage of 4.20 V or higher, specifically, 4.30 V or higher, and more specifically, 4.35 V or higher, based on a cathode potential. Therefore, the electrolytic solution may be applied to all the lithium secondary batteries such as a lithium ion battery and a lithium polymer battery.

Non-limiting examples of the secondary battery according to an exemplary embodiment of the present disclosure may include a lithium metal secondary battery, a lithium ion secondary battery, a lithium polymer secondary battery, and a lithium ion polymer secondary battery.

In addition, the present disclosure provides a lithium secondary battery including the electrolytic solution for a secondary battery of the present disclosure. The lithium secondary battery of the present disclosure includes
a cathode including a nickel-cobalt-manganese-based cathode active material containing the following Chemical Formula 11, the following Chemical Formula 12, or a mixture thereof,
an anode,
a separator interposed between the cathode and the anode, and
the electrolytic solution for a secondary battery according to an exemplary embodiment of the present disclosure:

   [Chemical Formula 11] Liₓ(NiₐCo_{b}Mn_{c})O₂
wherein 0.5 < x < 1.3, 0.8 ≤ a < 1.2, 0 < b < 1, 0 < c < 1, and a + b + c = 1,

   [Chemical Formula 12] Liₓ(NiₐCO_{b}Mn_{c})O₄
wherein 0.5 < x < 1.3, 0.8 ≤ a < 2, 0 < b < 2, 0 < c < 2, and a + b + c = 2.

The lithium secondary battery of the present disclosure employs a cathode produced using an active material containing a high content of nickel and an electrolytic solution containing a mixture of bis(sulfonyl)imide lithium salts as a specific compound, such that the lithium secondary battery may be quickly charged and may have excellent low-temperature characteristics and lifespan characteristics.

During charging and discharging of the lithium secondary battery, the cathode active material structurally collapses, and metal ions are thus eluted from a surface of the cathode. The metal ions are electrodeposited on the anode to deteriorate the anode. Such a deterioration phenomenon tends to further accelerate when a potential of the cathode is increased or the battery is exposed to a high temperature. In addition, in the lithium battery, in a case where a drive voltage is increased, film decomposition occurs on the surface of the cathode, and the surface of the cathode is thus exposed to an electrolyte, which may cause a side reaction with the electrolyte.

In particular, it is required for an electric vehicle to have a significantly high energy density. In order to solve the problems caused by a high content of Ni generally used for a cathode material when a battery having a high energy density is operated, the lithium secondary battery of the present disclosure employs the electrolytic solution containing a mixture of two or more bis(sulfonyl)imide lithium salts represented by Chemical Formula 1, such that the lithium secondary battery has improved battery characteristics.

Specifically, the lithium secondary battery of the present disclosure contains a combination of the electrolytic solution containing a mixture of two or more bis(sulfonyl)imide lithium salts represented by Chemical Formula 1 and the specific nickel-cobalt-manganese-based cathode active materials represented by Chemical Formulas 11 and 12, such that the lithium secondary battery may be quickly charged and may have improved lifespan characteristics.

Furthermore, the lithium secondary battery of the present disclosure employing a combination of the specific cathode and the electrolytic solution containing a specific additive may have improved cycle characteristics and low-temperature output characteristics even at a low temperature and a high voltage.

The cathode active material combined with the electrolytic solution for a secondary battery according to an exemplary embodiment of the present disclosure may be represented by Chemical Formula 11, and in Chemical Formula 11, 0.5 < x < 1.3, 0.8 ≤ a < 1.2, 0 < b < 1, 0 < c < 1, and a + b + c = 1. The cathode active material of the present disclosure may be, specifically, LiNi_{0.8}Co_{0.1}Mn_{0.1}O₂, LiNi_{0.88}CO_{0.06}Mn_{0.06}O₂), LiNi_{0.90}Co_{0.05}Mn_{0.05}O₂, or a mixture thereof, more specifically, LiNi_{0.83}CO_{0.06}Mn_{0.06}O₂, LiNi_{0.90}Co_{0.05}Mn_{0.05}O₂, or a mixture thereof, and still more specifically, LiNi_{0.88}CO_{0.06}Mn_{0.06}O₂.

The anode of the lithium secondary battery according to an exemplary embodiment of the present disclosure includes an anode current collector and an anode active material layer formed on the anode current collector. The anode active material layer includes an anode active material capable of intercalating and deintercalating lithium ions. As the anode active material, a carbon material such as crystalline carbon, amorphous carbon, a carbon complex, or a carbon fiber, a lithium metal, or an alloy of lithium with another element may be used. Non-limiting examples of the amorphous carbon include soft carbon (carbon baked at a low temperature), hard carbon, coke, mesocarbon microbead (MCMB) baked at 1,500°C or lower, and mesophase pitch-based carbon fiber (MPCF). Non-limiting examples of the crystalline carbon include a graphite-based material, specifically, natural graphite, graphitized coke, graphitized MCMB, and graphitized MPCF. The carbon material may be a material of which an interplanar distance is 3.35 to 3.38 Å and a crystallite size (Lc) measured by X-ray diffraction is 20 nm or more. As another element forming an alloy with lithium, aluminum, zinc, bismuth, cadmium, antimony, silicon, lead, tin, gallium, or indium may be used.

The cathode or the anode may be produced by dispersing an active material of each electrode, a binder, and a conductive material, and if necessary, a thickener, in a solvent to prepare an electrode slurry composition, and applying the electrode slurry composition onto an electrode current collector. As a cathode current collector, aluminum, an aluminum alloy, or the like may be mainly used, and as an anode current collector, copper, a copper alloy, or the like may be mainly used. An example of a shape of each of the cathode current collector and the anode current collector may include a foil or mesh shape.

The binder is a material playing a role in paste formation of the active material, adhesion between the active materials, adhesion with the current collector, a buffering effect on expansion and contraction of the active material, and the like. Examples of the binder include polyvinylidene fluoride (PVdF), a polyhexafluoropropylene-polyvinylidene fluoride (PVdF/HFP) poly(vinylacetate), polyvinyl alcohol, polyethylene oxide, polyvinylpyrrolidone, alkylated polyethylene oxide, polyvinyl ether, poly(methylmethacrylate), poly(ethylacrylate), polytetrafluoroethylene, polyvinylchloride, polyacrylonitrile, polyvinylpyridine, styrene-butadiene rubber, and acrylonitrile-butadiene rubber. A content of the binder is 0.1 to 30 wt% or 1 to 10 wt% with respect to the electrode active material. When the content of the binder is too small, an adhesive force between the electrode active material and the current collector is insufficient, and when the content of the binder is too large, the adhesive force is improved, but a content of the electrode active material is decreased in accordance with the content of the binder, which is disadvantageous in obtaining a battery having a high capacity.

The conductive material is used to impart conductivity to the electrode, and any electronic conductive material may be used as long as it does not cause a chemical change in a battery to be configured. At least one selected from the group consisting of a graphite-based conductive material, a carbon black-based conductive material, and a metal or metal compound-based conductive material may be used. Examples of the graphite-based conductive material include artificial graphite and natural graphite. Examples of the carbon black-based conductive material include acetylene black, ketjen black, denka black, thermal black, and channel black. Examples of the metal or metal compound-based conductive material include tin, tin oxide, tin phosphate (SnPO₄), titanium oxide, potassium titanate, and a perovskite material such as LaSrCoO₃ or LaSrMnO₃. However, the conductive material is not limited thereto.

A content of the conductive material may be 0.1 to 10 wt% with respect to the electrode active material. When the content of the conductive material is less than 0.1 wt%, electrochemical properties deteriorate, and when the content of the conductive material exceeds 10 wt%, an energy density per weight is decreased.

Any thickener may be used without limitation as long as it may serve to adjust a viscosity of the active material slurry, and for example, carboxymethyl cellulose, hydroxymethyl cellulose, hydroxyethyl cellulose, hydroxypropyl cellulose, or the like may be used.

As the solvent in which the electrode active material, the binder, the conductive material, and the like are dispersed, a non-aqueous solvent or an aqueous solvent is used. Examples of the non-aqueous solvent may include N-methyl-2-pyrrolidone (NMP), dimethylformamide, dimethylacetamide, N,N-dimethylaminopropylamine, ethyleneoxide, and tetrahydrofuran.

The lithium secondary battery according to an exemplary embodiment of the present disclosure may include a separator preventing a short circuit between the cathode and the anode and providing a movement path of the lithium ions. As such a separator, a polyolefin-based polymer film formed of polypropylene, polyethylene, polyethylene/polypropylene, polyethylene/polypropylene/polyethylene, or polypropylene/polyethylene/polypropylene, or a multi-layer thereof, a micro-porous film, woven fabric, or non-woven fabric may be used. In addition, a film obtained by coating a resin having excellent stability on a porous polyolefin film may be used.

The lithium secondary battery of the present disclosure may be formed into various shapes such as a cylindrical shape and a pouch shape, in addition to an angular shape. The secondary battery is suitable for use requiring a high voltage, a high output, and driving at a high temperature, such as an electric vehicle, in addition to the existing use for a mobile phone, a portable computer, or the like. In addition, the secondary battery may also be used for a hybrid vehicle in connection with the existing internal combustion engine, fuel cell, super capacitor, or the like, and may be used for all other uses such as an electric bike and a power tool requiring a high output, a high voltage, and driving at a high temperature.

Hereinafter, examples and comparative examples of the present disclosure will be described. However, each of the following examples is merely a preferred example of the present disclosure, and the present disclosure is not limited to the following examples. It is presumed that a lithium salt is entirely dissociated to have lithium ions having a concentration of 1 mole (1 M) in an electrolytic solution. An electrolytic solution for a secondary battery was prepared by dissolving a corresponding amount of each of a lithium salt such as LiPF₆ and a bis(sulfonyl)imide lithium salt as an additive so that a concentration of the lithium salts in the electrolytic solution was 1 mole (1 M).

### [Examples 1 and 2]

LiPF₆ and a bis(sulfonyl)imide lithium salt having concentrations shown in Table 1 were dissolved in a mixed solvent in which ethylene carbonate (EC) and ethyl methyl carbonate (EMC) were mixed in a volume ratio of 25:75, and 1 wt% of fluoroethylene carbonate (FEC) and 0.5 wt% of 1,3-propane sultone (PS) were added, thereby preparing an electrolytic solution.

A battery to which the non-aqueous electrolytic solution was applied was produced as follows.

LiNi_{0.88}Co_{0.06}Mn_{0.06}O₂ as a cathode active material, polyvinylidene fluoride (PVdF) as a binder, and carbon as a conductive material were mixed in a weight ratio of 98:1:1, and then, the mixture was dispersed in N-methyl-2-pyrrolidone, thereby preparing a cathode slurry. The slurry was coated on an aluminum foil having a of 12 µm, and the aluminum foil coated with the slurry was dried and rolled, thereby producing a cathode. Artificial graphite and graphite as anode active materials, styrene-butadiene rubber as a binder, and carboxymethyl cellulose as a thickener were mixed in a weight ratio of 96:2:2, and the mixture was dispersed in water, thereby preparing an anode active material slurry. The slurry was coated on a copper foil having a thickness of 8 µm, and the copper foil coated with the slurry was dried and rolled, thereby producing an anode.

A film separator formed of a polyethylene (PE) material and having a thickness of 13 µm was stacked between the prepared electrodes, a cell was configured using a pouch having a size of thickness 5 mm × length 50 mm × width 60 mm, and the non-aqueous electrolytic solution was injected into the pouch, thereby producing a 2 Ah grade lithium secondary battery for EV.

The performance of the 2 Ah grade battery for EV produced described above was evaluated as follows. Evaluation items are as follows.

### *Evaluation items*

1. Quick charge characteristics: A process of charging the battery to 8% of a state-of-charge (SOC) at room temperature and a current of 0.33 C, charging the battery step-by-step from 2.75 C to 0.75 C in a section of SOC of 8 to 80%, charging the battery at a current of 0.33 C in a section of SOC of 80 to 100%, and discharging the battery to 2.7 V at a current of 0.33 C was repeated 150 times.
2. Room temperature lifespan: A process of charging the battery (CC-CV 0.5C 4.2V 0.05C CUT-OFF) at room temperature and discharging the battery (CC 0.5C 2.7V CUT-OFF) was repeated 100 times or more. At this time, the first discharge capacity was defined as 1 C, and a capacity retention rate during the lifespan was calculated by dividing the 300^{th} discharge capacity by the first discharge capacity.
3. Low-temperature capacity: A process of charging the battery(CC-CV 0.5C 4.2V 0.05C CUT-OFF) at -10°C and discharging the battery(CC 0.5C 2.7V CUT-OFF) was repeated 10 times. The capacity after 10 times of discharging was calculated.

### [Comparative Examples 1 to 4]

The same process and evaluation were performed as those in Examples 1 and 2 except that the additives for the electrolytic solution shown in Table 1 were changed in Examples 1 and 2. The results thereof are shown in Table 1.

The performance of the battery produced as described above was evaluated by the above evaluation items. The results thereof are shown in Table 1.

**[Table 1]**

| | Lithium salt | Additive | | Quick charge capacity retention rate (150 cy, %) | Room temperature lifespan capacity retention rate (1,200 cy, %) | Room temperature lifespan capacity retention rate (1,500 cy, %) | 0.5 C low-temperature capacity (mAh) |
|---|---|---|---|---|---|---|---|
| Example 1 | 0.5M LiPF₆ | 0.4M LiFSI | 0.1M PEA344 | 93.3 | 84.4 | - | - |
| Example 2 | 0.8M LiPF₆ | 0.1M LiFSI | 0.1M PEA343 | - | - | 77.2 | 1396 |
| Comparative Example 1 | 1M LiPF₆ | - | - | 89.8 | 79.5 | 71.0 | 1297 |
| Comparative Example 2 | 0.5M LiPF₆ | 0.5M LiFSI | - | 91.2 | 81.4 | - | - |
| Comparative Example 3 | 0.8M LiPF₆ | 0.2M LiFSI | - | - | - | 70.2 | 1354 |
| Comparative Example 4 | 0.8M LiPF₆ | - | 0.2M PEA343 | - | - | 73.0 | 1359 |

| | | | | | | | |
|---|---|---|---|---|---|---|---|
| NB : Example 1 is not according to the invention, it is presented for reference only. | | | | | | | |

Basic electrolytic solution: EC:EMC (25:75) vol% FEC 1 wt% PS 0.5 wt%
LiFSI: 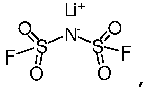
PEA343: 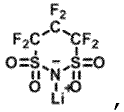
PEA 344:

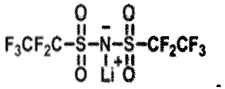

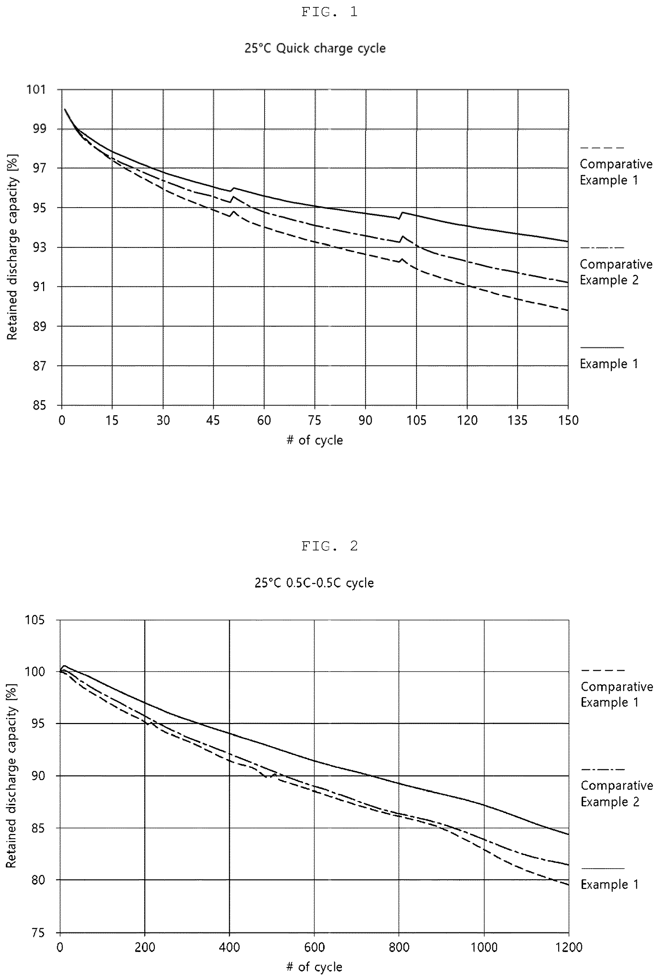

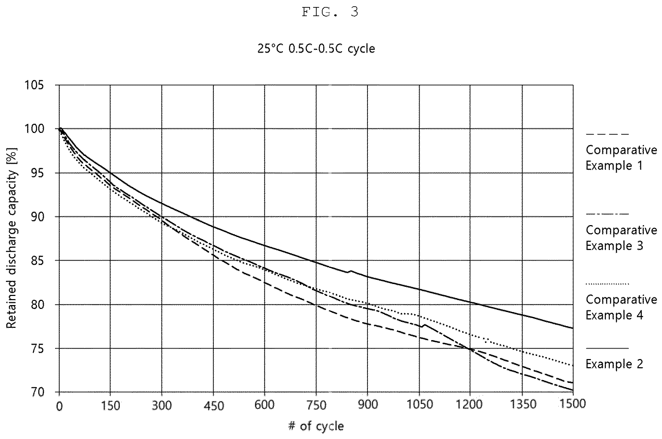

From Table 1 and FIGS. 1 to 3, it could be appreciated that in each of the lithium secondary batteries of Examples 1 and 2 employing the electrolytic solution of the present disclosure containing the mixture of two or more bis(sulfonyl)imide lithium salts, the quick charge characteristics and lifespan characteristics were significantly improved as compared with the lithium secondary battery of Comparative Example 1 containing no bis(sulfonyl)imide lithium salt and the lithium secondary batteries of Comparative Examples 2 to 4 containing the bis(sulfonyl)imide lithium salt

The electrolytic solution for a secondary battery of the present disclosure contains a mixture of bis(sulfonyl)imide lithium salts as a specific additive, such that the output of the secondary battery may not deteriorate even at a high voltage, and the secondary battery may be quickly charged and may have significantly improved cycle characteristics and low-temperature capacity characteristics.

Further, the lithium secondary battery of the present disclosure employs the electrolytic solution for a secondary battery of the present disclosure that contains a mixture of bis(sulfonyl)imide lithium salts and contains the specific cathode active material, such that the output of the lithium secondary battery does not deteriorate even at a high voltage, and in particular, the lithium secondary battery has significantly improved low-temperature characteristics as well as excellent lifespan characteristics.

In addition, the lithium secondary battery of the present disclosure employs the combination of the cathode employing a cathode active material containing a high content of nickel and the electrolytic solution containing a mixture of bis(sulfonyl)imide lithium salts as a specific additive, such that the lithium secondary battery has significantly improved quick charge characteristics.

In addition, the lithium secondary battery of the present disclosure employs the mixture of bis(sulfonyl)imide lithium salts in the electrolytic solution, such that the internal resistance of the battery is reduced to have further improved output characteristics.

Further, the lithium secondary battery of the present disclosure employs the electrolytic solution for a secondary battery that contains a mixture of bis(sulfonyl)imide lithium salts as an additive and contains a specific fluoro-substituted cyclic carbonate compound as an additional additive, such that the lithium secondary battery has improved cycle characteristics and quick charge characteristics even during charging and discharging at a low temperature, a high temperature, and a high voltage.

## Claims

1. An electrolytic solution for a secondary battery, comprising:
a lithium salt;
a non-aqueous organic solvent; and
a mixture of a bis(sulfonyl)imide lithium salt represented by the following Chemical Formula 2 and a bis(sulfonyl)imide lithium salt represented by the following Chemical Formula 3 as an additive: 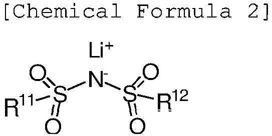 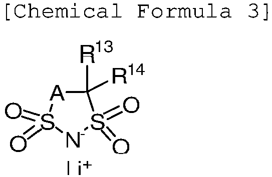 wherein
A is - (CR¹⁵R¹⁶)ₙ-;
R¹¹ to R¹⁶ are each independently fluoro or C1 - C5 perfluoroalkyl; and
n is an integer of 0 to 3.

2. The electrolytic solution of claim 1, wherein
the additive is selected from the following compounds:

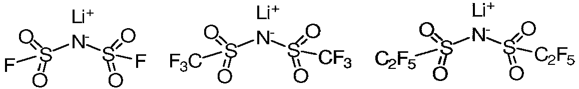

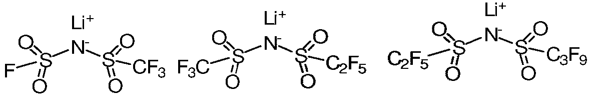

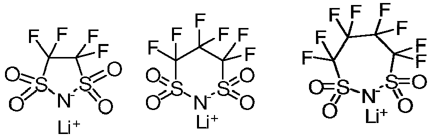

3. The electrolytic solution of claim 1, wherein
the additive is present at a concentration of 0.1 to 0.5 M.

4. The electrolytic solution of claim 1, wherein
the additive is a mixture of lithium bis(fluorosulfonyl)imide and one or more compounds selected from bis(sulfonyl)imide lithium salts represented by the following Chemical Formula 3: 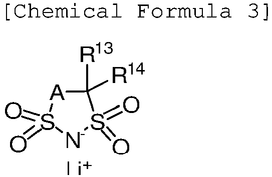 wherein
A is -(CR¹⁵R¹⁶)ₙ-;
R¹³ to R¹⁶ are each independently fluoro or C1 - C5 perfluoroalkyl; and
n is an integer of 0 to 3.

5. The electrolytic solution of claim 4, wherein
the bis(sulfonyl)imide lithium salt represented by Chemical Formula 3 is contained in an amount of 0.1 to 1.5 moles with respect to 1 mole of the lithium bis(fluorosulfonyl)imide.

6. The electrolytic solution of claim 1, further comprising a fluoro-substituted cyclic carbonate compound.

7. The electrolytic solution of claim 6, wherein
the fluoro-substituted cyclic carbonate compound is contained in an amount of 0.1 to 5 wt% with respect to a total weight of the electrolytic solution.

8. The electrolytic solution of claim 1, wherein
the lithium salt is one or two or more selected from the group consisting of LiPF₆, LiBF₄, LiClO₄, LiSbF₆, LiAsF₆, LiN(SO₃C₂F₅)₂, LiCF₃SO₃, LiC₄F₉SO₃, LiC₆H₅SO₃, LiSCN, LiAlO₂, LiAlCl₄, LiCl, LiI, and LiB(C₂O₄)₂.

9. The electrolytic solution of claim 8, wherein
the lithium salt is present at a concentration of 0.3 to 1.0 M.

10. A lithium secondary battery comprising:
a cathode comprising a nickel-cobalt-manganese-based cathode active material containing the following Chemical Formula 11, the following Chemical Formula 12, or a mixture thereof;
an anode;
a separator interposed between the cathode and the anode; and
the electrolytic solution for a secondary battery of any one of claims 1 to 9:
[Chemical Formula 11] Liₓ(NiₐCo_{b}Mn_{c})O₂
wherein 0.5 < x < 1.3, 0.8 ≤ a < 1.2, 0 < b < 1, 0 < c < 1, and a + b + c = 1,
[Chemical Formula 12] Liₓ(NiₐCo_{b}Mn_{c})O₄
wherein 0.5 < x < 1.3, 0.8 ≤ a < 2, 0 < b < 2, 0 < c < 2, and a + b + c = 2.

11. The lithium secondary battery of claim 10, wherein
the cathode active material is Liₓ(NiₐCo_{b}Mn_{c})O₂ in which 0.95 ≤ x ≤ 1.10, 0.8 ≤ a < 0.9, and a + b + c = 1.

## Patentansprüche

1. Elektrolytlösung für eine Sekundärbatterie, umfassend:
ein Lithiumsalz;
ein nichtwässriges organisches Lösungsmittel; und
ein Gemisch aus einem Bis(sulfonyl)imid-Lithiumsalz, dargestellt durch die folgende chemische Formel 2, und einem Bis(sulfonyl)imid-Lithiumsalz, dargestellt durch die folgende chemische Formel 3, als ein Additiv: 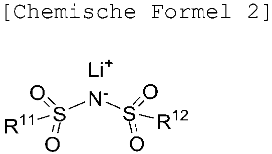 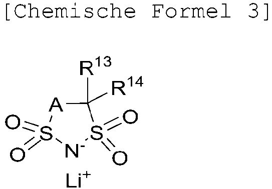 wobei
A -(CR¹⁵R¹⁶)ₙ- ist;
R¹¹ bis R¹⁶ jeweils unabhängig Fluor oder C1-C5-Perfluoralkyl sind; und
n eine ganze Zahl von 0 bis 3 ist.

2. Elektrolytlösung nach Anspruch 1, wobei
das Additiv aus den folgenden Verbindungen ausgewählt ist:

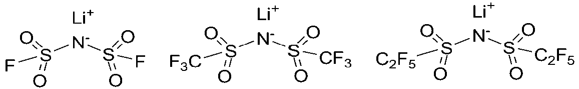

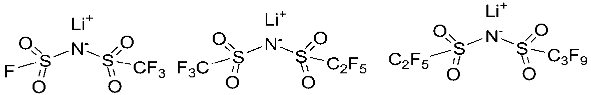

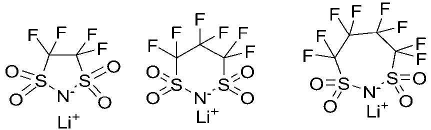

3. Elektrolytlösung nach Anspruch 1, wobei
das Additiv in einer Konzentration von 0,1 bis 0,5 M vorhanden ist.

4. Elektrolytlösung nach Anspruch 1, wobei
das Additiv ein Gemisch aus Lithium-bis(fluorsulfonyl)imid und einer oder mehreren Verbindungen, ausgewählt aus Bis(sulfonyl)imid-Lithiumsalzen, dargestellt durch die folgende chemische Formel 3, ist: 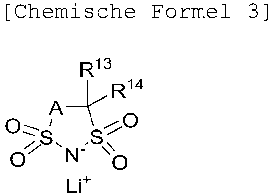 wobei
A -(CR¹⁵R¹⁶)ₙ- ist;
R¹³ bis R¹⁶ jeweils unabhängig Fluor oder C1-C5-Perfluoralkyl sind; und
n eine ganze Zahl von 0 bis 3 ist.

5. Elektrolytlösung nach Anspruch 4, wobei
das Bis(sulfonyl)imid-Lithiumsalz, dargestellt durch die chemische Formel 3, in einer Menge von 0,1 bis 1,5 Mol in Bezug auf 1 Mol des Lithium-bis(fluorsulfonyl)imids enthalten ist.

6. Elektrolytlösung nach Anspruch 1, außerdem umfassend eine fluorsubstituierte cyclische Carbonatverbindung.

7. Elektrolytlösung nach Anspruch 6, wobei
die fluorsubstituierte cyclische Carbonatverbindung in einer Menge von 0,1 bis 5 Gew.-% in Bezug auf ein Gesamtgewicht der Elektrolytlösung enthalten ist.

8. Elektrolytlösung nach Anspruch 1, wobei
das Lithiumsalz eines oder zwei oder mehrere ausgewählt aus der Gruppe bestehend aus LiPF₆, LiBF₄, LiClO₄, LiSbF₆, LiAsF₆, LiN(SO₃C₂F₅)₂, LiCF₃SO₃, LiC₄F₉SO₃, LiC₆H₅SO₃, LiSCN, LiAlO₂, LiAlCl₄ LiCl, LiI und LiB(C₂O₄)₂ ist.

9. Elektrolytlösung nach Anspruch 8, wobei
das Lithiumsalz in einer Konzentration von 0,3 bis 1,0 M vorhanden ist.

10. Lithiumsekundärbatterie, umfassend:
eine Kathode, umfassend ein Kathodenaktivmaterial auf Nickel-Kobalt-Mangan-Basis, enthaltend die folgende chemische Formel 11, die folgende chemische Formel 12 oder ein Gemisch davon;
eine Anode;
einen Separator, der zwischen der Kathode und der Anode angeordnet ist; und
die Elektrolytlösung für eine Sekundärbatterie nach einem der Ansprüche 1 bis 9:
[Chemische Formel 11] Liₓ(NiₐCo_{b}Mn_{c})O₂
wobei gilt 0,5 < x < 1,3, 0,8 ≤ a < 1, 2, 0 < b < 1, 0 < c < 1 und a + b + c = 1,
[Chemische Formel 12] Liₓ(NiₐCo_{b}Mn_{c})O₄
wobei gilt 0,5 < x < 1,3, 0,8 ≤ a < 2, 0 < b < 2, 0 < c < 2 und a + b + c = 2.

11. Lithiumsekundärbatterie nach Anspruch 10, wobei
das Kathodenaktivmaterial Liₓ(NiₐCo_{b}Mn_{c})O₂ ist, wobei gilt 0,95 ≤ x ≤ 1,10, 0,8 ≤ a < 0,9 und a + b + c = 1.

## Revendications

1. Solution électrolytique pour une batterie secondaire, comprenant :
un sel de lithium ;
un solvant organique non aqueux ; et
un mélange d'un sel de lithium de bis (sulfonyl)imide, représenté par la formule chimique 2 suivante, et d'un sel de lithium de bis(sulfonyl)imide, représenté par la formule chimique 3 suivante, en tant qu'additif : 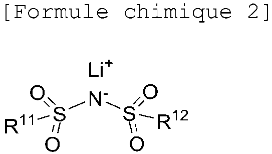 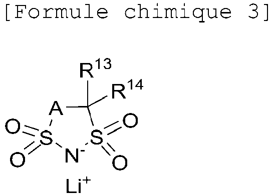 où
A représente - (CR¹⁵ R¹⁶ )ₙ - ;
R¹¹ à R¹⁶ représentent chacun indépendamment un atome de fluor ou un groupe perfluoroalkyle en C1 à C5 ; et
n est un nombre entier compris entre 0 et 3.

2. Solution électrolytique selon la revendication 1, dans laquelle
l'additif est choisi parmi les composés suivants :

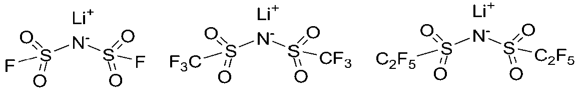

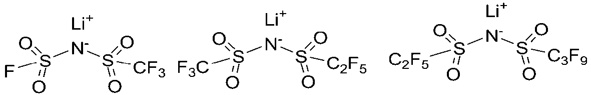

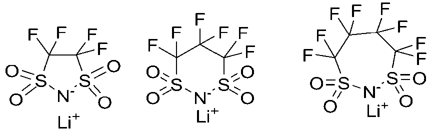

3. Solution électrolytique selon la revendication 1, dans laquelle
l'additif est présent à une concentration comprise entre 0,1 et 0,5 M.

4. Solution électrolytique selon la revendication 1, dans laquelle
l'additif est un mélange de bis(fluorosulfonyl)imide de lithium et d'un ou plusieurs composés choisis parmi les sels de bis(sulfonyl)imide de lithium représentés par la formule chimique 3 suivante : 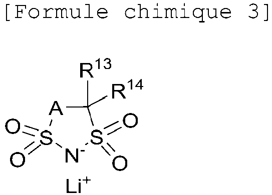 où
A représente -(CR¹⁵ R¹⁶ )ₙ - ;
R¹³ à R¹⁶ représentent chacun indépendamment un atome de fluor ou un groupe perfluoroalkyle en C1 à C5 ; et
n est un nombre entier compris entre 0 et 3.

5. Solution électrolytique selon la revendication 4, dans laquelle
le sel de lithium de bis(sulfonyl)imide, représenté par la formule chimique 3, est présent en une quantité de 0,1 à 1,5 mole par rapport à 1 mole de bis(fluorosulfonyl)imide de lithium.

6. Solution électrolytique selon la revendication 1, comprenant en outre un composé carbonate cyclique fluoré.

7. Solution électrolytique selon la revendication 6, dans laquelle
le composé carbonate cyclique fluoré est présent en une quantité de 0,1 à 5 % en poids par rapport au poids total de la solution électrolytique.

8. Solution électrolytique selon la revendication 1, dans laquelle
le sel de lithium d'un, de deux ou de plusieurs composés choisis dans le groupe constitué par LiPF₆, LiBF₄, _{LiClO₄}, LiSbF₆, LiAsF₆, LiN(_{SO₃C₂F₅})₂et LiCF₃ SO₃ , LiC₄ F₉ SO₃ , LiC₆ H₅ SO₃ , LiSCN, LiAlO₂ , LiAlCl₄ , LiCl, LiI et LiB(C₂ O₄ )₂ .

9. Solution électrolytique selon la revendication 8, dans laquelle
le sel de lithium est présent à une concentration comprise entre 0,3 et 1,0 M.

10. Batterie secondaire au lithium comprenant :
une cathode comprenant un matériau actif de cathode à base de nickel-cobalt-manganèse, contenant la formule chimique 11 suivante, la formule chimique 12 suivante ou un mélange de celles-ci ;
une anode ;
un séparateur disposé entre la cathode et l'anode ; et
la solution électrolytique pour une batterie secondaire selon l'une des revendications 1 à 9 :
[Formule chimique 11] Liₓ (Niₐ CO_{b} Mn_{c} )O₂
où 0,5 < x < 1, 3, 0,8 ≤ a < 1,2, 0 < b < 1, 0 < c < 1 et a + b + c = 1,
[Formule chimique 12] Liₓ(NiₐCo_{b}Mn_{c})O₄
où 0,5 < x < 1, 3, 0,8 ≤ a < 2, 0 < b < 2, 0 < c < 2 et a + b + c = 2.

11. Batterie secondaire au lithium selon la revendication 10, dans laquelle
le matériau actif de la cathode est Liₓ (Niₐ Co_{b} Mn_{c} ) O₂ , où 0,95 ≤ x ≤ 1,10, 0,8 ≤ a < 0,9 et a + b + c = 1.
